(19) Europäisches Patentamt
European Patent Office
Office européen des brevets

(11) Veröffentlichungsnummer : **0 006 220**
**B1**

(12) # EUROPÄISCHE PATENTSCHRIFT

(45) Veröffentlichungstag der Patentschrift : **19.08.81**

(51) Int. Cl.³ : **C 07 F 9/65**

(21) Anmeldenummer : **79101916.9**

(22) Anmeldetag : **13.06.79**

(54) **Verfahren zur Herstellung von 3-Acyl-2-alkyl- und 3-Acyl-2-aryl-1.3.2-benzoxazaphospholanen.**

(30) Priorität : **19.06.78 DE 2826622**

(43) Veröffentlichungstag der Anmeldung : **09.01.80 (Patentblatt 80/01)**

(45) Bekanntmachung des Hinweises auf die Patenterteilung : **19.08.81 Patentblatt 81/33**

(84) Benannte Vertragsstaaten : **BE CH DE FR GB IT NL**

(56) Entgegenhaltungen :

**SU - A - 447 408**

**Chemical Abstracts, Band 79, Nr. 11, 1973, COLUMBUS, OHIO, USA**
**M.A. PUDOVIK et al. « N-Acylated oxazaphospholanes and phosphorinanes »**
**Seine 441, Spalte 1, Abstract Nr. 66261y**

**Chemical Abstracts, Band 81, Nr. 11, 1974, COLUMBUS, OHIO, USA**
**M.A. PUDOVIK et al. « Synthesis of N-acetylated 1,3,2-oxaazaphospholanes »**
**Seite 484, Spalte 1, Abstract Nr. 63723f**

(73) Patentinhaber : **HOECHST AKTIENGESELLSCHAFT**
**Zentrale Patentabteilung Postfach 80 03 20**
**D-6230 Frankfurt/Main 80 (DE)**

(72) Erfinder : **Feicht, Utz-Hellmuth, Dr.**
**Kaiserstrasse 99**
**D-6793 Bruchmühlbach (DE)**

EP 0 006 220 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Verfahren zur Herstellung von 3-Acyl-2-alkyl- und 3-Acyl-2-aryl-1.3.2-benzoxazaphospholanen

3-Acyl-2-alkyl- und 3-Acyl-2-aryl-1.3.2-benzoxaphospholane sind Verbindungen der Formel

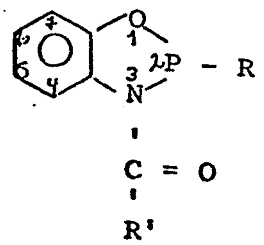

in welcher die Reste R und R', welche gleich oder verschieden sein können, organische Reste sind und ggf. auch der Benzolkern noch substituiert sein kann.

Die Verbindungen sind wertvolle Zwischenprodukte zur Herstellung von Alkyl-bzw. Aryl-1-oxophospholenen [M. und A. Pudovik, IZvt. Akad. Nauk. SSR, Ser. Khim 964 (1975)] ; der Weg zu diesen Oxophospholenen läßt sich durch folgende schematische Formelgleichung wiedergeben :

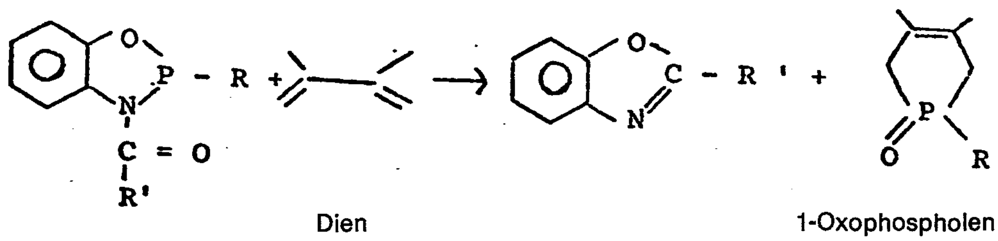

Dien 1-Oxophospholen

Die Alkyl- und Aryl-1-oxophospholene sind ihrerseits u.a. Katalysatoren für die Herstellung von technisch hochwertigen und wirtschaftlich bedeutenden Polyurethan-Hartschäumen (siehe z.B. DE-OS 26 06 682, DE-AS 20 36 173 und US-PS 3 855 186).

An 3-Acyl-2-alkyl- und 3-Acyl-2-aryl-1.3.2-benzoxaphospholanen sind allerdings bisher lediglich zwei konkrete Verbindungen bekannt, nämlich 3-Acetyl-2-äthyl- und 3-Acetyl-2-phenyl-1.3.2.-benzoxaphospholan [M. und A. Pudovik et al., Zh. Obsh. Khim. *44*, 1 020 (1974)]. Ihre Herstellung erfolgt ausgehend von Äthyl-bzw. Phenyldichlorphosphan, 2-N-Acetylaminophenol und chlorwasserstoffbindenden organischen Stickstoffbasen (in einem inerten Lösungsmittel) in einer Zweistufenreaktion, wobei in der ersten Stufe aus Dichlorphosphan und Diäthylamin zunächst das entsprechende Phosphonigsäurediamid hergestellt und isoliert, und in der zweiten Stufe dann dieses Phosphonigsäurediamid mit 2-N-Acetylaminophenol zu dem entsprechenden Benzoxaphospholan umgesetzt wird. Die zwei Stufen dieser Reaktion lassen sich durch folgende Formelgleichungen wiedergeben :

1. 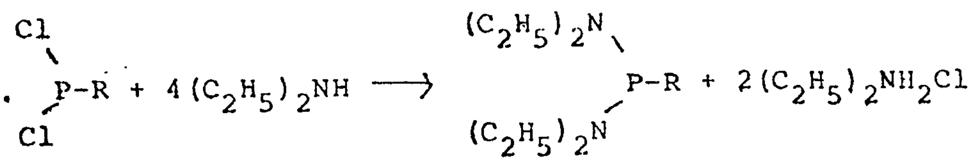

R=$C_2H_5$, $C_6H_5$

Dichlorphosphan Diäthylamin Phosphonigsäurediamid

2. 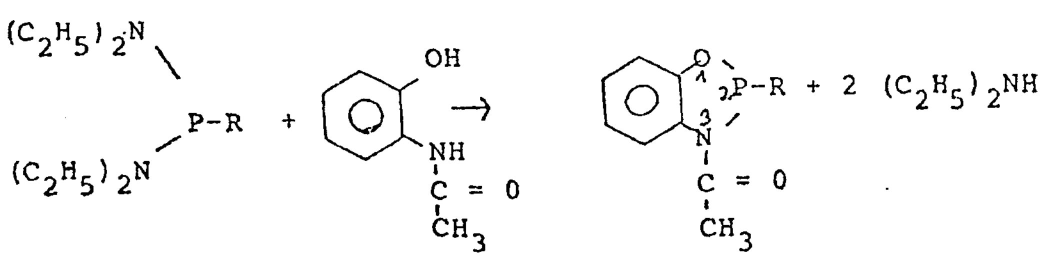

2-N-Acetylamino-phenol 3-Acetyl-2-äthyl-bzw.

3-Acetyl-2-phenyl-1.3.2-benzoxazaphospholan

Für die technische Durchführung ist dieses Zweistufenverfahren zur Herstellung von Benzoxazaphospholanen jedoch aufwendig und nicht genügend wirtschaftlich, zumal in der wesentlichen zweiten Stufe nur Ausbeuten von etwa 55 bis 64 % d.Th. erreicht werden.

Aus der vorstehend zitierten Literaturstelle [M.A. Pudovik et al. Zh. Obsh. Khim. 44, 1 020 (1974)] ist es zwar bekannt, ausgehend von $PCl_3$ und 2-N-Acetylaminophenol (ohne Zusatz von HCl-bindenden Basen) direkt zu dem 1.3.2-Benzoxazaphospholan-Ringsystem zu gelangen :

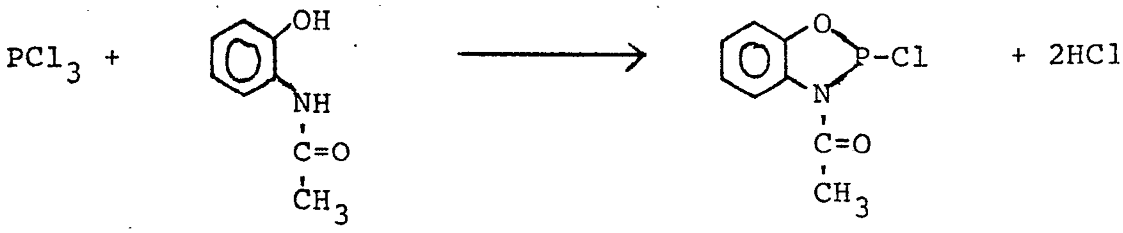

3-Acetyl-2-chlor-1.3.2-benzoxazaphospholan

Dabei werden Ausbeuten bis zu 75 % erhalten.

Es war jedoch nicht zu erwarten, daß diese Reaktion bei Ersatz des $PCl_3$ durch Dichlorphosphane $PCl_2R$ (R = organ. Rest) die entsprechenden 3-Acetyl-alkyl- und 3-Acetyl-2-aryl-benzoxazaphospholane in noch höheren Ausbeuten ergibt, wenn man die Umsetzung in Gegenwart einer chlorwasserstoffbindenden organischen Stickstoffbase durchführt.

Es war aufgrund der nicht allen Anforderungen gerecht werdenden bekannten Verfahren nun wünschenswert und bestand die Aufgabe, ein einfacheres und wirtschaftlicheres verbessertes Verfahren zu schaffen, welches sich außer auf die Herstellung der bekannten 3-Acetyl-2-ethyl- und 3-Acetyl-2-phenyl-1.3.2-benzoxazaphospholane auch auf die Herstellung anderer und neuer Benzoxazaphospholane anwenden läßt.

Diese Aufgabe konnte erfindungsgemäß dadurch gelöst werden, daß man Dichlorphosphane mit 2-N-Acylaminophenolen in Gegenwart von chlorwasserstoffbindenden organischen Stickstoffbasen in einem inerten Lösungsmittel ohne Isolierung eines Zwischenprodukts im Einstufenverfahren umsetzt.

Erfindungsgegenstand ist somit ein Verfahren zur Herstellung von 3-Acyl-2-alkyl- und 3-Acyl-2-aryl-1.3.2-benzoxazaphospholanen, ausgehend von Dichlorphosphanen, 2-N-Acylaminophenolen und chlorwasserstoffbindenden organischen Stickstoffbasen in einem inerten Lösungsmittel ;

das Verfahren ist dadurch gekennzeichnet, daß man Dichlorphosphane, 2-N-Acylaminophenole und chlorwasserstoffbindende organische Stickstoffbasen im Molverhältnis etwa 1 : 1 : $\geqq$ 2 in einem inerten Lösungsmittel ohne Isolierung eines Zwischenprodukts im Einstufenverfahren umsetzt.

Das Gelingen dieser Umsetzung ohne Isolierung eines Zwischenproduktes in einer Stufe war außerordentlich überraschend, da normalerweise Carbonsäureamide, wie die 2-N-Acylaminophenole nur unter drastischen Bedingungen durch ein Säurechlorid am N-Atom (zweit-) acyliert werden können.

Es war weiterhin überraschend, daß bei dem erfindungsgemäßen Einstufenverfahren außerordentlich hohe bis nahezu quantitative Ausbeuten an den gewünschten Benzoxazaphospholanen erhalten werden, da die Ausbeuten nach dem bekannten Zweistufenverfahren des Standes der Technik erheblich niedriger liegen. Während z.B. bei der Umsetzung von Phenyldichlorphosphan mit 2-N-Acetylaminophenol und Triäthylamin auf die erfindungsgemäßen Einstufen-Verfahrensweise 3-Acetyl-2-phenyl-1.3.2-benzoxazaphospholan in einer Ausbeute von 99,6 % entsteht, beträgt die Ausbeute an diesem Produkt bei der Umsetzung von Phosphonigsäure-bis-diäthylamid mit 2-N-Acetylaminophenol nur 52 % d.Th. Der Ausbeutevergleich würde noch günstiger für das erfindungsgemäße Verfahren ausfallen, wenn man beim Zweistufenverfahren des Standes der Technik auch noch die Ausbeute der ersten Stufe miteinbeziehen würde.

Als Dichlorphosphane können für das erfindungsgemäße Verfahren im Prinzip alle möglichen Organo-dichlorphosphane verwendet werden ; bevorzugt ist jedoch der Einsatz solcher Dichlorphosphane der Formel (I)

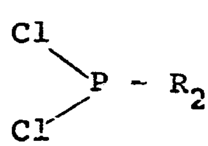

(I)

in welcher $R_2$ = $(C_1$-$C_{12})$-, vorz. $(C_1$-$C_4)$-Alkyl, ggf. substituiert durch Cl und/oder Br,

Cyclopentyl, Cyclohexyl, Phenyl, Naphthyl } ggf. substituiert durch Cl, Br, $(C_1$-$C_4)$-Alkyl und/oder $(C_1$-$C_4)$-Alkoxy

Beispielhafte Dichlorphosphane I sind : Methyldichlorphosphan, Äthyldichlorphosphan, Butyldichlorphosphan, Chlormethyldichlorphosphan, Phenyldichlorphosphan, Naphthyldichlorphosphan, etc. Sie sind nach bekannten Verfahren zugänglich [K. Sasse in Houben-Weyl, Methoden der org. Chemie, G. Thieme Verlag, Stuttgart 1963, Bd. 12/1, S. 302 ff].

Besonders bevorzugt sind Methyldichlorphosphan, Äthyldichlorphosphan und Phenyldichlorphosphan.

Als 2-N-Acylaminophenole kommen im Prinzip alle Verbindungen mit dem 2-N-Acylaminophenolgrundgerüst in Frage ; bevorzugt sind aber Verbindungen der Formel II

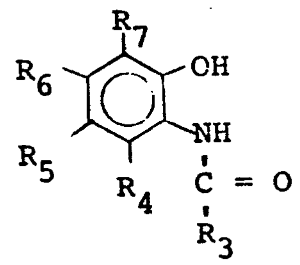

(II)

worin $R_3$ = H,
($C_1$-$C_{12}$)-, vorz. ($C_1$-$C_4$)-Alkyl, ggf. substituiert durch Cl und/oder Br,
Cyclopentyl, Cyclohexyl } ggf. subst. durch Cl, Br, ($C_1$-$C_4$)-Alkyl
Phenyl, Naphthyl } und/oder ($C_1$-$C_4$)-Alkyl

$R_4$-$R_7$ = unabhängig voneinander H,
($C_1$-$C_4$)-Alkyl,
($C_1$-$C_4$)-Alkoxy,
Cl, Br.

Als konkrete N-Acylaminophenole II kommen Verbindungen in Betracht, wie z.B. : 2-N-Acetylaminophenol, 2-N-Propionylaminophenol, 2-N-Butanoylaminophenol, 2-N-Benzoylaminophenol, 2-N-Acetylamino-3-chlorphenol, 2-N-Acetylamino-4-chlorphenol, 2-N-Acetylamino-5-chlorphenol, 2-N-Acetylamino-6-chlorphenol oder die entsprechenden Bromderivate, 3-N-Acetamino-4-oxy-toluol, 4-N-Acetylamino-3-oxy-toluol, 5-N-Acetylamino-4-oxy-1,2-xylol, 2-N-Acetamino-4-methoxyphenol etc. Die N-Acylaminophenole werden nach bekannten Methoden durch Acylierung aus den betreffenden Carbonsäure-anhydriden un den freien Anilinen dargestellt [s. z.B. Fierz-David u. Kuster, Helv. Chim. Acta *22,* 82 (1939) oder auch L. Raiford u.C. Greider, J. Am. Chem. Soc. *46,* 432 (1924)].

Als chlorwasserstoffbindende organische Stickstoffbasen finden vor allem primäre, sekundäre und tertiäre Amine, insbesondere solche mit 1-12 C-Atomen im Molekül Verwendung. Solche Amine sind z.B. Triäthylamin, N,N-Dimethylanilin, Pyridin, Diäthylamin, Dimethylamin, N-Methylanilin, Piperidin, Dicyclohexylamin, Methylamin, Äthylamin, Propylamin, Butylamin, Cyclohexylamin und Anilin.

Brauchbare und gegenüber den Ausgangs- und Endverbindungen inerte Lösungsmittel sind aliphatische und aromatische Kohlenwasserstoffe, insbesondere solche mit 5-8 C-Atomen, wie z.B. Heptan, Hexan, Pentan oder Benzingemische mit ($C_5$-$C_8$)-Aliphaten, Xylol, Toluol, Benzol etc. Es finden auch chlorierte Kohlenwasserstoffe wie z.B. Methylenchlorid, Chloroform oder Tetrachlorkohlenstoff sowie Di- oder Trichloräthan Verwendung. Auch indifferente Äther wie z.B. Tetrahydrofuran, Dioxan Diisopropyläther oder Diäthyläther sind verwendbar.

Das erfindungsgemäße Verfahren kann in einem relativ breiten Temperaturbereich durchgeführt werden. Allgemein wird im Temperaturbereich von etwa − 50° bis +150 °C, vorzugsweise zwischen etwa +20° und +90 °C gearbeitet. Die Reaktionsdauer liegt zwischen wenigen Minuten und einigen Stunden, im allgemeinen bei etwa 30-60 Minuten.

Das Verfahren wird zweckmäßig unter Inertgasatmosphäre durchgeführt. Als Inertgase kommen vor allem in Frage : Stickstoff, Kohlendioxid und Argon.

Das Verhältnis von Lösungsmittel zur Summe der Reaktionspartner kann in einem relativ weiten Bereich variiert werden. Allgemein wird ein Gewichstverhältnis von etwa 2:1 bis etwa 10:1 (Lösungsmittel : Summe der Reaktionspartner), bevorzugt ein Verhältnis von etwa 3:1 bis etwa 6:1 und besonders bevorzugt ein Verhältnis von etwa 4:1 verwendet.

Im allgemeinen wird derartig gearbeitet, daß die Reaktionspartner gemischt und gemeinsam erhitzt werden, oder einer der Reaktionspartner, bevorzugt das Dichlorphosphan, zur Lösung bzw. Aufschlämmung des 2-N-Acylaminophenols in dem betreffenden Lösungsmittel-Basengemisch zugetropft werden. Die auftretende Reaktionswärme wird im allgemeinen ohne Außenkühlung zur Erwärmung der Reaktionsmischung ausgenutzt, wodurch die Nachheizzeit zur Vervollständigung der Umsetzung verkürzt wird.

Bei der Reaktions ist es zweckmäßig, die beiden Reaktionspartner Organodichlorphosphan und 2-N-Acylaminophenol im Molverhältnis von etwa 1:1 einzusetzen. Die chlorwasserstoffbindende Stickstoffbase wird im allgemeinen in Mengen von etwa 2 Mol pro Mol Dichlorphosphan eingesetzt, jedoch kann die Base auch im Überschuß vorliegen.

Die Aufarbeitung des Reaktionsansatzes erfolgt durch Abtrennung des Hydrochlorid-Niederschlages durch Filtration mit oder ohne Druck oder durch Zentrifugieren.

Nach Abtrennung des Salzniederschlages wird die das Reaktionsprodukt enthaltende Lösung durch Destillation bei Normal-oder vermindertem Druck vom Lösungsmittel befreit. Nach Entfernen des Lösungsmittels bei vermindertem Druck kristallisieren die 3-N-Acyl-2-alkyl(aryl)-1.3.2-benzoxazaphospholane in reiner Form aus. Eine weitere Reinigung der anfallenden Reaktionsprodukte ist an sich nicht erforderlich, kann aber — wenn es erwünscht ist — nach bekannten Methoden, z.B. Destillation unter vermindertem Druck oder Umkristallisation, durchgeführt werden.

Die Erfindung wird nun anhand der folgenden Beispiele weiter erläutert.

Beispiel 1

Zu einer Aufschlämmung von 332 g (2,2 mol) 2-N-Acetylaminophenol in 4 l Toluol und 460 g (4,55 mol) Triäthylamin tropft man unter $N_2$ innerhalb 10 min. 200 ml (2,2 mol) Methyldichlorphosphan. Dabei erwärmt sich die Reaktionslösung auf ca. 50 °C. Nach beendeter Zugabe hält man 30 min. bei 90 °C, kühlt ab und saugt das ausgefallene Triäthylaminhydrochlorid mit einer Drucknutsche unter $N_2$ ab. Das Filtrat wird bei 40 °C/12 torr eingedampft, anhaftende Lösungsmittelreste bei 30 °C/0,1 torr entfernt und zur Kristallisation angerieben. Ausb. 424 g (98,8 % d.Th.) 3-Acetyl-2-methyl-1.3.2-benzoxazaphospholan vom Fp. 43-46 °C.

| | | | | |
|---|---|---|---|---|
| Ber. | C 55,39 % ; | H 5,16 % ; | N 7,18 % ; | P 15,87 % |
| Gef. | C 55,10 % ; | H 5,30 % ; | N 7,40 % ; | P 15,80 % |

$C_9H_{10}NO_2P$ (195,2)

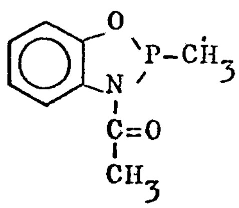

Beispiel 2

Analog Beispiel 1 werden 332 g (2,2 mol) 2-N-Acetylaminophenol mit 394 g (2,2 mol) Phenyldichlorphosphan und 460 g (4,55 mol) Triäthylamin in Toluol umgesetzt und aufgearbeitet. Ausb. an 3-Acetyl-2-phenyl-1.3.2-benzoxazaphospholan : 563 g (99,6 % d.Th.) vom Fp. 73-75 °C.

| | | | | |
|---|---|---|---|---|
| Ber. | C 65,37 % ; | H 4,70 % ; | N 5,45 % ; | P 12,04 % |
| Gef. | C 64,70 % ; | H 4,80 % ; | N 5,50 % ; | P 11,70 % |

$C_{14}H_{12}N_2P$ (257,2)

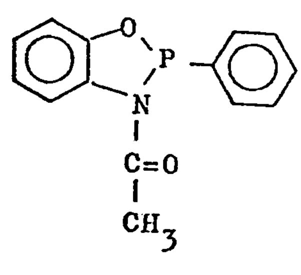

Vergleichsbeispiel zu Beispiel 2

Zu 119,3 g (0,79 mol) N-Acetylaminophenol in 1.000 ml Toluol tropft man schnell unter $N_2$ 200,0 g (0,79 mol) Phenylphosphingsäure-bis-diäthylamid. Man erhitzt zum Rückfluß bis kein Diäthylamin mehr entweicht (6 h) und entfernt das Lösungsmittel bei 50 °C/15 torr. Der harzige Rückstand wird in 300 ml Äther aufgenommen, zur Kristallisation angerieben und 1 h bei 0 °C belassen. Absaugen liefert 106,0 g (52 % d.Th.) 3-Acetyl-2-phenyl-1.3.2-benzoxazaphospholan vom Fp. 73-74 °C.

Beispiel 3

Zu einer Aufschlämmung von 98,5 g (0,55 mol) 5-N-Acetylamino-4-hydroxy-1.2-xylol in 1 l Toluol und 115 g (1.14 mol) Triäthylamin tropft man unter $N_2$ innerhalb 10 min. 50 ml (0,55 mol) Methyldichlorphosphan. Nach beendeter Zugabe hält man 15 min. bei 90 °C, kühlt ab und saugt das ausgefallene Triäthylaminhydrochlorid ab. Das Filtrat wird bei 40 °C/12 torr eingedampft, anhaftende Lösungsmittelreste bei 30 °C/0,1 torr entfernt und zur Kristallisation ausgerieben. Ausb. 119 g (97,1 % d.Th.) 3-Acetyl-2-methyl-5,6-dimethyl-1.3.2-benzoxazaphospholan vom Fp. 102-103 °C.

Ber. C 59,19 % ; H 6,32 % ; N 6,28 % ; P 13,88 %
Gef. C 60,50 % ; H 6,70 % ; N 6,20 % ; P 13,30 %

$C_{11}H_{14}NO_2P$ (223,2)

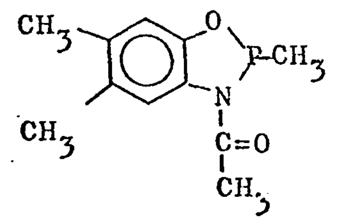

Beispiel 4

Analog Beispiel 3 werden 98,5 g (0,55 mol) 5-N-Acetylamino-4-hydroxy-1.2-xylol mit 98,5 g (0,55 mol) Phenyldichlorphosphan und 115 g (1,14 mol) Triäthylamin in Toluol umgesetzt und aufgearbeitet. Ausb. an 3-Acetyl-2-phenyl-5,6-dimethyl-1.3.2-benzoxazaphospholan : 153 g (97,5 % d.Th.) vom Fp. 73 °C.

Ber. C 67,36 % ; H 5,65 % ; N 4,91 % ; P 10,86 %
Gef. C 67,40 % ; H 5,80 % ; N 5,10 % ; P 10,60 %

$C_{16}H_{16}NO_2P$ (285,3)

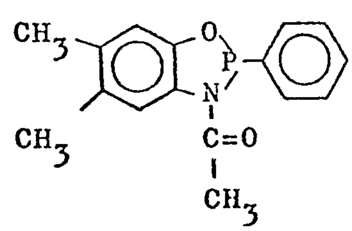

Beispiel 5

Analog Beispiel 3 werden 102,0 g (0,55 mol) 2-N-Acetylamino-4-chlor-phenol mit 50 ml (0,55 mol) Methyldichlorphosphan und 115 g (1,14 mol) Triäthylamin in Toluol umgesetzt und aufgearbeitet. Ausb. an 3-Acetyl-2-methyl-3-chlor-1.3.2-benzoxazaphospholan : 125 g (98,9 % d.Th.) vom Fp. 49-51 °C.

Ber. C 47,08 % ; H 3,95 % ; N 6,10 % ; P 13,49 %
Gef. C 47,00 % ; H 4,20 % ; N 6,30 % ; P 13,10 %

$C_9H_9ClNO_2P$ (229,6)

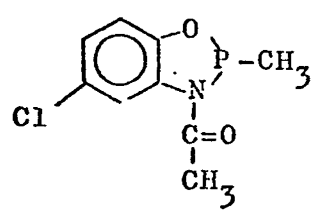

Beispiel 6

Analog Beispiel 5 werden 102,0 g (0,55 mol) 2-N-Acetylamino-4-chlor-phenol mit 98,5 g (0,55 mol) Phenyldichlorphosphan und 115 g (1,14 mol) Triäthylamin in Toluol umgesetzt und aufgearbeitet. Ausb.

an 3-Acetyl-2-phenyl-5-chlor-1.3.2-benzoxazaphospholan : 154 g (96 % d.Th.) vom Fp. 56-58 °C.

Ber. C 57,65 % ; H 3,80 % ; N 4,80 % ; P 10,62 %
Gef. C 57,60 % ; H 4,00 % ; N 4,90 % ; P 10,30 %.

$C_{14}H_{11}ClNO_2P$ (219,7)

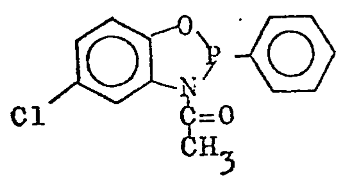

## Beispiel 7

In eine Aufschlämmung von 85,7 g (0,55 mol) 2-N-Acetylaminophenol in 1 l Toluol werden bei 0 °C 36 g (0,16 mol) Methylamin eingeleitet. Dann tropft man unter $N_2$ 50 ml (0,55 mol) Methyldichlorphosphan bei 0 °C unter Außenkühlung zu. Anschließend wird noch 1 h bei 100 °C gehalten, abgekühlt und abgesaugt. Das Filtrat liefert nach Entfernen des Lösungsmittels bei 40 °C/12 torr 105 g (97,9 % d.Th.) 3-Acetyl-2-methyl-1.3.2-benzoxazaphospholan.

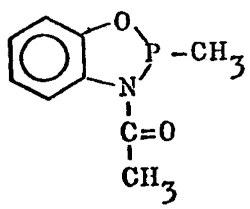

## Beispiel 8

Zu einer Lösung von 36,3 g (0,22 mol) 2-N-Propionylaminophenol in 500 ml Toluol und 46 g (0,45 mol) Triäthylamin tropft man unter $N_2$ 20 ml (0,22 mol) Methyldichlorphosphan. Nach beendeter Zugabe hält man 15 min. bei 90 °C, kühlt ab und saugt das ausgefallene Triäthylaminhydrochlorid ab.

Das Filtrat wird bei 40 °C/12 torr eingedampft und anhaftende Lösungsmittelreste bei 30 °C/0,1 torr entfernt. Es verbleiben 45,6 g (99 % d.Th.) 3-Propionyl-2-methyl-1.3.2-benzoxazaphospholan als farbloses Öl.

Ber. C 57,42 % ; H 5,78 % ; N 6,70 % ; P 14,81 %
Ger. C 57,40 % ; H 5,70 % ; N 6,80 % ; P 13,60 %

$C_{10}H_{12}NO_2P$ (209,2)

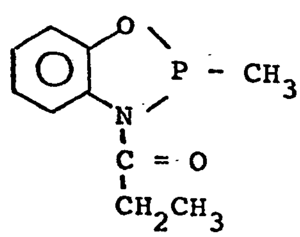

## Beispiel 9

Analog Beispiel 8 werden 151 g (1,1 mol) 2-N-Formylaminophenol mit 100 ml (1,1 mol) Methyldichlorphosphan und 230 g (2,28 mol) Triäthylamin in Toluol umgesetzt und aufgearbeitet.

Ausbeute an 3-Formyl-2-methyl-1.3.2-benzoxazaphospholan 195,5 g (98,2 % d.Th.) als hellgelbes Öl.

Ber. C 53,5 % ; H 4,45 % ; N 7,75 % ; P 17,1 %
Gef. C 52,2 % ; H 4,3 % ; N 7,8 % ; P 16,1 %

$C_8H_8NO_2P$ (181,1)

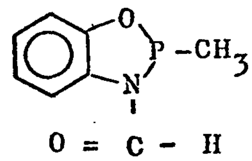

Beispiel 10

Analog Beispiel 8 werden 151 g (1,1 mol) 2-N-Formylaminophenol mit 148 ml (1,1 mol) Phenyldichlorphosphan und 230 g (2,28 mol) Triäthylamin in Toluol umgesetzt und aufgearbeitet.

Ausbeute an 3-Formyl-2-phenyl-1.3.2-benzoxazaphospholan 259 g (97,0 % d.Th.) als hellgelbes Öl.

| | | | | |
|---|---|---|---|---|
| Ber. | C 64,20 %; | H 4,14 %; | N 5,76 %; | P 12,74 % |
| Gef. | C 63,9 %; | H 4,4 %; | N 6,0 %; | P 11,5 % |

$C_{13}H_{10}NO_2P$ (243,2)

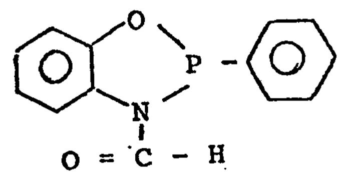

**Ansprüche**

1. Verfahren zur Herstellung von 3-Acyl-2-alkyl- und 3-Acyl-2-aryl-1.3.2-benzoxazaphospholanen, ausgehend von Dichlorphosphanen, 2-N-Acylaminophenolen und chlorwasserstoffbindenden organischen Stickstoffbasen in einem inerten Lösungsmittel, dadurch gekennzeichnet, daß man Dichlorphosphan, 2-N-Acylaminophenole und chlorwasserstoffbindende organische Stickstoffbasen im Molverhältnis etwa 1:1:≧2 in einem inerten Lösungsmittel ohne Isolierung einer Zwischenstufe im Einstufenverfahren umsetzt.

2. Verfahren nach Anspruch 1, dadurch gekennzeichnet, daß man als Dichlorphosphane Verbindungen der Formel I

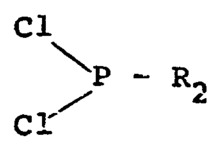

(I)

in welcher $R_2$ = $(C_1$-$C_{12})$-, vorz. $(C_1$-$C_4)$-Alkyl, ggf. substituiert durch Cl und/oder Br,
Cyclopentyl, Cyclohexyl, Phenyl, Naphthyl } ggf. subst. durch Cl, Br, $(C_1$-$C_4)$-Alkyl und/oder $(C_1$-$C_4)$-Alkoxy

verwendet.

3. Verfahren nach Ansprüchen 1 bis 2, dadurch gekennzeichnet, daß man als 2-N-Acylaminophenole Verbindungen der Formel II

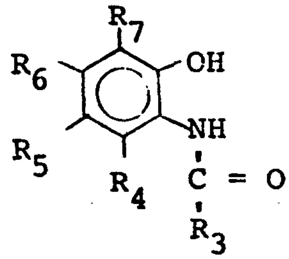

(II)

worin $R_3$ = H
($C_1$-$C_{12}$)-, vorz. ($C_1$-$C_4$)-Alkyl, ggf. subst. durch Cl und/oder Br,
Cyclopentyl, Cyclohexyl, Phenyl, Naphthyl } ggf. subst. durch Cl, Br, ($C_1$-$C_4$)-Alkyl und/oder ($C_1$-$C_4$)-Alkoxy

$R_4$-$R_7$ = unabhängig voneinander H,
($C_1$-$C_4$)-Alkyl,
($C_1$-$C_4$)-Alkoxy,
Cl, Br
verwendet.

4. Verfahren nach Ansprüchen 1-3, dadurch gekennzeichnet, daß man als chlorwasserstoffbindende organische Stickstoffbasen primäre, sekundäre und/oder tertiäre Amine mit 1 bis 12 C-Atomen im Molekül verwendet.

5. Verfahren nach Ansprüchen 1 bis 4, dadurch gekennzeichnet, daß man als inerte Lösungsmittel aliphatische und/oder aromatische Kohlenwasserstoffe mit 5 bis 8 C-Atomen, Chlorkohlenwasserstoffe mit 1 bis 2 C-Atomen und/oder aliphatische Äther mit 4 bis 6 C-Atomen verwendet.

6. Verfahren nach Ansprüchen 1 bis 5, dadurch gekennzeichnet, daß man die Umsetzung bei Temperaturen von etwa − 50 bis + 150 °C, vorzugsweise von etwa +20 bis +90 °C durchführt.

## Claims

1. Process for the manufacture of 3-acyl-2-alkyl- and 3-acyl-2-aryl-1,3,2-benzoxazaphospholanes from dichlorophosphanes, N-acylaminophenols and organic nitrogen bases binding hydrogen chloride, in an inert solvent, characterized in reacting dichlorophosphane, 2-N-acylaminophenols and organic nitrogen bases binding hydrogen chloride in a molar proportion of about 1:1 ≧2 in a one stage process in an inert solvent without isolation of an intermediate product.

2. The process as claimed in claim 1, characterized in using as dichlorophosphanes compounds of the formula I

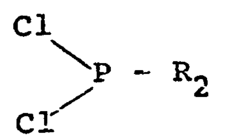

(I)

in which $R_2$ denotes ($C_1$-$C_{12}$)alkyl, preferably ($C_1$-$C_4$)-alkyl which may be substituted by Cl and/or Br ; cyclopentyl, cyclohexyl, phenyl or naphthyl which may be substituted by Cl, Br, ($C_1$-$C_4$) alkyl and/or ($C_1$-$C_4$)alkoxy.

3. The process as claimed in claims 1-2, characterized in using as 2-N-acylaminophenols compounds or the formula II

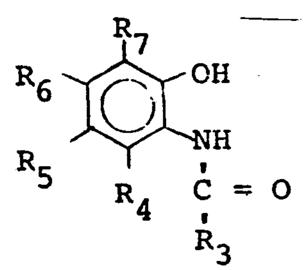

(II)

in which $R_3$ denotes hydrogen, ($C_1$-$C_{12}$)alkyl, preferably ($C_1$-$C_4$)alkyl, which may be substituted by Cl and/or Br ; cyclopentyl, cyclohexyl, phenyl or naphthyl which may be substituted by Cl, Br, ($C_1$-$C_4$)alkyl and/or ($C_1$-$C_4$)alkoxy, and $R_4$-$R_7$, independent of one another, denote hydrogen, ($C_1$-$C_4$)alkyl, ($C_1$-$C_4$)alkoxy, Cl or Br.

4. Process as claimed in claims 1-3, characterized in using as organic nitrogen bases binding hydrogen chloride primary, secondary and/or tertiary amines having from 1 to 12 carbon atoms in the molecule.

5. Process as claimed in claims 1-4, characterized in using as inert solvents aliphatic and/or aromatic hydrocarbons having from 5 to 8 carbon atoms, chlorohydrocarbons having 1 or 2 carbon atoms and/or aliphatic ethers having from 4 to 6 carbon atoms.

6. Process as claimed in claims 1-5, characterized in carrying out the reaction at a temperature of from about −50 to + 150 °C, preferably from about + 20 to + 90 °C.

**Revendications**

1. Procédé de préparation d'acyl-3 alkyl-2 benzoxazaphospholannes-1,3,2 et d'acyl-3 aryl-2 benzoxazaphospholannes-1,3,2 à partir de dichlorophosphanes, de N-acylamino-2 phénols et de bases azotées organiques capables de fixer le chlorure d'hydrogène, dans un solvant inerte, procédé caractérisé en ce qu'on fait réagir en une seule étape les dichlorophosphanes, les N-acylamino-2 phénols et les bases azotées organiques capables de fixer le chlorure d'hydrogène, dans une proportion molaire d'environ 1 : 1 : 1 ⩾ 2, dans un solvant inerte, sans isoler de corps intermédiaire.

2. Procédé selon la revendication 1, caractérisé en ce qu'on utilise, comme dichlorophosphanes, des composés répondant à la formule I :

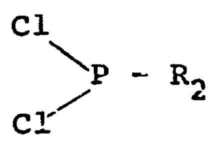

(I)

dans laquelle $R_2$ représente :

— un radical alkyle en $C_1$-$C_{12}$, de préférence en $C_1$-$C_4$, éventuellement porteur de Cl et/ou de Br, ou

— un radical cyclopentyle, cyclohexyle, phényle ou naphtyle, éventuellement porteur de Cl, de Br, d'un alkyle en $C_1$-$C_4$ et/ou d'un alcoxy en $C_1$-$C_4$.

3. Procédé selon l'une des revendications 1 et 2, caractérisé en ce qu'on utilise, comme N-acylamino-2 phénols, des composés répondant à la formule II :

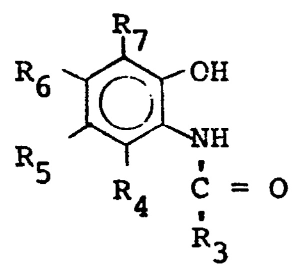

(II)

dans laquelle $R_3$ représente H,

— un radical alkyle en $C_1$-$C_{12}$, de préférence en $C_1$-$C_4$, éventuellement porteur de Cl et/ou de Br,

— un radical cyclopentyle, cyclohexyle, phényle ou naphtyle, éventuellement porteur de Cl, de Br, d'un alkyle en $C_1$-$C_4$ et/ou d'un alcoxy en $C_1$-$C_4$,

$R_4$ à $R_7$ représentent, indépendamment les uns des autres, H, un alkyle en $C_1$-$C_4$, un alcoxy en $C_1$-$C_4$, Cl ou Br.

4. Procédé selon l'une quelconque des revendications 1 à 3, caractérisé en ce qu'on utilise, comme bases azotées organiques capables de fixer le chlorure d'hydrogène, des amines primaires, secondaires et/ou tertiaires contenant de 1 à 12 atomes de carbone dans leur molécule.

5. Procédé selon l'une quelconque des revendications 1 à 4, caractérisé en ce qu'on utilise, comme solvants inertes, des hydrocarbures aliphatiques et/ou aromatiques contenant de 5 à 8 atomes de carbone, des hydrocarbures chlorés contenant 1 ou 2 atomes de carbone et/ou des éthers aliphatiques contenant de 4 à 6 atomes de carbone.

6. Procédé selon l'une quelconque des revendications 1 à 5, caractérisé en ce qu'on effectue la réaction à des températures d'environ −50 à + 150 °C, de préférence d'environ + 20 à +90 °C.